# EUROPEAN PATENT APPLICATION

(11) **EP 4 671 393 A1**
(43) Date of publication of application: **31.12.2025**
(21) Application number: 24185134.4
(22) Date of filing: 27.06.2024
(51) Int. Cl.: C22B 3/44, C01F 7/47, C22B 34/22

(54) **METHODS FOR RECOVERING VANADIUM FROM A VANADIUM COMPRISING LIQUID FEED**

(71) Applicant: VITO NV, 2400 Mol (BE)
(72) Inventor: Seftel, Elena Mihaela, 2400 Mol (BE); Michielsen, Bart, 2400 Mol (BE); Bhowmick, Subhamoy, 2400 Mol (BE); Vangeneugden, Dirk, 2400 Mol (BE)
(74) Representative: AWA Benelux

(57) **Abstract**

The present invention relates to a method for removing vanadium (V) from a V comprising liquid feed, the method comprising contacting a solid precipitating agent with a V comprising liquid feed, thereby forming a V comprising precipitate and a V depleted liquid feed, and separating the precipitate from the V depleted liquid feed, the solid precipitating agent comprising one or more of Ca(OH)₂ having a portlandite crystal structure, and a nesosilicate hydroxyl garnet having the formula A₃B₂(SiO₄)₃₋ₓ(OH)ₓ, wherein A, individually, is selected from the group consisting of Ca, Mg, Fe, Mn, wherein at least one A is Ca, wherein B, individually, is selected from the group consisting of Al, Fe, Cr, wherein at least one B is Al, and wherein x is higher than 0 and lower than 3.

## Description

### Technical field

The present invention is related to methods for removing vanadium from liquid streams comprising vanadium, such as Bayer liquors.

### Background art

Over the past years, a steady increase for the demand for vanadium has been observed, because it is a key material in various applications. Known for its hardness, and its ability to enhance steel properties, including ductility, shock resistance, and wear resistance, vanadium is incorporated in steel and alloys. Because of its high-temperature resistance, vanadium is used in metals. Vanadium is added to steels to stabilize carbides, it is used in high-speed tool steel, high-strength low-alloy steel, and wear-resistant cast iron, it may be alloyed with steel and other metals to create specialized alloys for specific applications. Vanadium compounds serve as catalysts in chemical reactions, such as catalysts used in the production of sulfuric acid. Vanadium is also used in redox flow batteries, superfast electronic circuits and powerful electromagnets.

Due to the lack of high-grade vanadium ore, vanadium mainly has to be won by recovering it from industrial side streams, such as vanadium-titanium magnetite smelting tailings, waste catalysts, stone coal, etc. These resources are not only limited, but the existing technologies to extract vanadium therefrom are expensive, heavily polluting, require long processes and have low recovery rates.

Vanadium compounds have also been found in bauxite, the primary ore from which aluminium is derived. Bauxite mainly consists of aluminium hydroxides and oxide-hydroxides, iron oxides and oxide-hydroxides, clay minerals, silicon dioxide and titanium dioxide, often in various polymorphic mineral phases. Bauxite also contains vanadium (V), and besides vanadium (V) bauxite may contain other economically important materials, such as scandium (Sc), gallium (Ga), molybdenum (Mo) and rare elements.

The Bayer process, one of the most frequently used processes to extract aluminium from bauxite, comprises contacting the bauxite with a concentrated sodium hydroxide solution to dissolve the aluminium. Thereby, a slurry is formed. The slurry comprises sodium aluminate dissolved in a caustic liquid fraction (so-called Bayer liquor), and a solid fraction of residual gangue solids. After precipitation of aluminium hydroxide, the caustic Bayer liquor is typically recycled for reuse in the extraction process.

However, the precipitation of aluminium is mostly incomplete. As a result, aluminium may accumulate in the recycled Bayer liquor. Besides aluminium, the recycled (spent) Bayer liquor usually contains several other materials originally present in the bauxite, such as vanadium, gallium, silicon, arsenic and molybdenum.

The presence of vanadium in the spent Bayer liquor has been found to affect Bayer processes reusing this spent Bayer liquor, by requiring specialized removal or recovery methods to ensure efficient alumina extraction because vanadium tends to interfere with the recovery of aluminium from the spent Bayer liquor. During the precipitation of aluminium hydroxide (Al(OH)₃) from the liquor, vanadium may coprecipitate along with aluminium. This can not only lead to impurities in the final aluminium product, but also limits the possibility to remove (i.e. recover) vanadium as a raw material. While vanadium recovery is crucial due to its strategic importance, managing its presence during aluminium recovery from spent Bayer liquor remains a challenge.

Besides this, vanadium, being present alongside gallium in spent Bayor liquors, complicates the selective recovery (i.e. removal) process of gallium because co-removal or co-extraction takes place. Gallium is a critical material, especially for applications like semiconductors and electronics, rendering its efficient removal or extraction essential. Therefore, it would be beneficial to efficiently extract vanadium prior to extracting gallium from the spent Bayer liquor.

WO2019/227128 discloses a method for controlling the concentration of impurities in a Bayer liquor, comprising adding 100-125 g/L of an oxide and/or a hydroxide of a metal other than aluminium, such as calcium or magnesium, to the Bayer liquor, thereby forming a layered double hydroxide such as hydrocalumite and/or hydrotalcite, and incorporating at least one impurity of phosphorous, vanadium and silicon. The process is performed for 1 hour at 60 °C.

CN100375716 discloses a method for removing V₂O₅ from spent Bayer liquor by adding 10-30 g/L CaO to the spend Bayer liquor, heating the mixture to 90-110 °C and stirring the mixture for 30 minutes to 2 hours, followed by filtering to obtain a precipitate containing vanadium, more in particular a precipitate comprising CaO, Al₂O₃ and less than 1 % of V₂O₅. The precipitate is then further treated to recover the V₂O₅.

CN114574699 discloses a method for preparing ammonium metavanadate and ammonium molybdate from a vanadium comprising molybdenum solution, the solution comprising at least 1 g/L of vanadium and 1 g/L of molybdenum. In a first step, vanadium is extracted by mixing at most 100 g/L CaO and/or Ca(OH)₂ with the solution at 75-100 °C for 0.15 hours to 3 hours, thereby obtaining precipitated calcium vanadate, which is then separated from the (first) solution. The amount of Ca²⁺ ions added is equal to 1 to 1.5 times the theoretical amount of calcium vanadate produced. More than 43 wt.% of vanadium can be extracted. In a second step, the first solution is mixed with CaO and/or Ca(OH)₂ at 30-70 °C, thereby obtaining a calcium molybdate precipitate, which is then separated from the first solution.

A disadvantage of the foregoing processes is the need for an elevated temperature in order to allow CaO and/or Ca(OH)₂ to form a precipitate comprising vanadium. Another disadvantage is the low amount of vanadium that can be extracted, and the rather high amounts of precipitating agent needed.

There is therefore the need for a process to remove or extract vanadium from vanadium comprising liquid feeds, such as spent Bayer liquor, so that it can be recovered as raw material. There is also a need for a more efficient reuse of Bayer liquor as a liquid feed. When the liquid feed also comprises gallium, such an improved vanadium removal process can also realise a more efficient and high purity extraction of the gallium from the liquid feed.

### Summary of the invention

The present invention aims to overcome one or more of the above drawbacks. It is an aim to provide a process for efficient removal (i.e. at a high yield, removal rate or removal percentage) of vanadium from a liquid feed comprising vanadium. It is a further aim to provide a process that allows the selective removal (i.e. extraction) of vanadium from such a liquid feed. It is also an aim of this invention to provide a process allowing to remove (extract) primarily vanadium without co-removing other components, such as gallium and molybdenum.

Another aim of the invention is to provide a vanadium removal process that can efficiently (i.e. high selectivity for vanadium and high removal rate/percentage for vanadium) be performed at a lower temperature and/or for a shorter duration, and which consequently has a reduced total energy consumption when compared to existing processes. Yet another aim is to provide a process that requires the use of limited amounts of precipitating agents.

It is a further aim to provide a process to improve the quality (composition, purity) of a liquid feed, which can then be recycled and reused, thereby reducing the environmental impact and improving the sustainability of processes using such a liquid feed. A particular example of such a liquid feed and process is a (spent) Bayer liquor used in the aluminium extraction from bauxite by means of the Bayer process, wherein the Bayer liquor is advantageously reused several times.

In the light of the present invention, the terms "removal" and "extraction" of a compound or an element from a liquid feed are used interchangeably to indicate the removal of the compound or the element from the liquid feed, which in the present disclosure leads to a precipitate comprising the compound or the element and a liquid feed depleted (i.e. comprising less, or substantially none) of the compound or the element.

The term "recovery of a compound or an element from a precipitate" is used in the present disclosure for the separation of a compound or an element from a precipitate, leading to the compound or the element on one hand, and the precipitate devoid of the compound or the element on the other hand.

According to an aspect of the present disclosure, there is provided a method for removing vanadium from a vanadium comprising liquid feed.

The method comprises contacting a vanadium comprising liquid feed with a solid precipitating agent, thereby forming a vanadium comprising precipitate and a vanadium depleted liquid feed. The method further comprises separating the vanadium comprising precipitate from the vanadium depleted liquid feed.

The solid precipitating agent comprises or substantially consists of calcium hydroxide (Ca(OH)₂) having a portlandite crystal structure. Advantageously, the solid precipitating agent comprises or substantially consists of calcium hydroxide (Ca(OH)₂) having for at least 10 % by weight, preferably at least 20%, more preferably at least 40%, most preferably at least 50 %, for example at least 60 % by weight, at least 70 % by weight, at least 80 % by weight, such as at least 90 % by weight of a portlandite crystal structure. A particularly preferred example is calcium hydroxide substantially consisting of a portlandite crystal structure, a term used for calcium hydroxide having for at least 98.9 % by weight a portlandite crystal structure.

Additionally or alternatively, the solid precipitating agent comprises or substantially consists of a nesosilicate hydroxyl garnet having the formula A₃B₂(SiO₄)₃₋ₓ(OH)ₓ, wherein
A, individually, is selected from the group consisting of Ca, Mg, Fe, Mn, wherein at least one A is Ca,
B, individually, is selected from the group consisting of Al, Fe, Cr, wherein at least one B is Al, and
x is higher than 0 and lower than 3.

Advantageously, x is equal to or higher than 1.5. Advantageously, all A are Ca and all B are Al. Advantageously, the nesosilicate hydroxyl garnet is katoite, having the structural formula Ca₃Al₂(SiO₄)₃₋ₓ(OH)ₓ, wherein x is equal to or higher than 1.5 and lower than 3.

Advantageously, the solid precipitating agent comprises for at least 10 % by weight, preferably at least 20 % by weight, more preferably at least 40 % by weight, most preferably at least 50 % by weight, for example at least 60 % by weight or at least 70 % by weight, the one or more of Ca(OH)₂ with a portlandite crystal structure and the nesosilicate hydroxyl garnet having the formula hereinabove described, based on the total weight of the solid precipitating agent.

The inventors have found that the portlandite crystal structure and the nesosilicate hydroxyl garnets have a layered crystal structure, wherein the layers are spaced apart from one another by a basal interlayer space. Without wishing to be bound by any theory, the inventors believe that this basal interlayer space is capable of selectively adsorbing vanadium containing ions therein at a high rate, while ions comprising further metals such as Mo, Ga and As are not adsorbed.

The inventors also believe that the nesosilicate hydroxyl garnet further comprises Ca²⁺ cations in the basal interlayer space, wherein these Ca²⁺ cations function as binding sites for vanadium containing ions, thereby allowing the highly selective removal of vanadium at a high efficiency (i.e. a high percentage, a high yield). In the light of the present disclosure, a high efficiency, a high percentage and a high yield are used interchangeable to indicate that the vanadium concentration in the vanadium depleted liquid feed is equal to or lower than 80 %, more preferably equal to or lower than 50 %, even more preferably equal to or lower than 20 % and most preferably equal to or lower than 10 % of the vanadium concentration of the vanadium comprising liquid feed prior to contacting the liquid feed with the solid precipitating agent.

Advantageously, the amount of the solid precipitating agent contacted with the vanadium comprising liquid feed corresponds to between 1 and 50000, preferably between 5 and 10000, more preferably between 10 and 5000, such as between 20 and 2000, between 25 and 1000, and most preferably between 50 and 500 moles Ca²⁺ per mole of vanadium in the vanadium comprising liquid feed.

Advantageously, the liquid feed has a temperature between -20 °C and 250 °C, preferably between 0 °C and 250 °C, such as between 0 °C and 150 °C, more preferably between 0 °C and 100 °C, most preferably between 10 °C and 95 °C, in particular between 15 °C and 90 °C, or between 20 °C and 70 °C. In other words, the method can be performed for liquid feeds having a low temperature as well as liquid feeds having an elevated temperature. Consequently, the method of the present disclosure has the advantage that the liquid feed advantageously does not need to be heated or cooled prior to contacting it with the solid precipitating agent, thereby reducing the energy consumption and complexity of the process when compared to prior art processes for removing vanadium from a liquid feed.

Advantageously, the liquid feed comprises at least 0.1 mg/L of vanadium, preferably at least 1 mg/L, more preferably at least 5 mg/L of vanadium or at least 7.5 mg/L, such as at least 10 mg/L. Advantageously, the liquid feed comprises at most 5000 mg/L of vanadium, preferably at most 2500 mg/L, more preferably at most 1000 mg/L. Advantageously, the liquid feed comprises between 0.1 mg/L and 5000 mg/L, preferably between 1 mg/L and 2500 mg/L, more preferably between 5 mg/L and 2000 mg/L, most preferably between 10 mg/L and 1000 mg/L of vanadium.

The liquid feed can further comprise one or more of aluminium (Al), silicon (Si), gallium (Ga), molybdenum (Mo) and Arsenic (As). The inventors have discovered that the methods of the present invention allow a selective removal of vanadium from liquid feeds, without substantial extraction of Ga, Mo, and As therefrom, if present in the liquid feed. It is thus an advantage of the methods of the present invention that vanadium can be selectively removed from liquid feeds having a wide range of compositions. It is believed that it is the composition and the structure of the solid precipitating agent that leads to this effect.

Advantageously, when the liquid feed comprises Al and optionally Si and the solid precipitating agent comprises or substantially consists of Ca(OH)₂ having a portlandite crystal structure, upon contacting the liquid feed with the solid precipitating agent at least 10 % by weight, preferably at least 30 % by weight, more preferably at least 50 % by weight, most preferably at least 75 % by weight, such as at least 80 % by weight or at least 85 % by weight, of the Ca(OH)₂ is transformed into a hydroxyl garnet having the formula A₃B₂(SiO₄)₃₋ₓ(OH)ₓ, wherein A, individually, is selected from the group consisting of Ca, Mg, Fe, Mn, wherein at least one A is Ca, B, individually, is selected from the group consisting of Al, Fe, Cr, wherein at least one B is Al, and x is higher than 0 and equal to or lower than 3. More particularly, when the liquid feed comprises Si, x is higher than 0 and lower than 3, and when the liquid feed does not comprise Si, x is 3. Advantageously, the resulting solid precipitating agent comprises at least 10 % by weight, preferably at least 20 % by weight, more preferably at least 40 % by weight, even more preferably 60 % by weight, most preferably at least 70 % by weight of a hydroxyl garnet having the formula as hereinabove described, based on the total weight of the solid precipitating agent.

Advantageously, when the liquid feed comprises Si, the formed hydroxyl garnet is a nesosilicate hydroxyl garnet. Advantageously, the nesosilicate hydroxyl garnet is katoite, having the structural formula as hereinabove described.

Advantageously, the liquid feed and the solid precipitating agent are agitated during contacting. The inventors have discovered that agitation contributes to a better contact of the liquid feed, and in particular the vanadium comprised therein, with the solid precipitating agent, which contributes to an even higher removal efficiency of vanadium.

Advantageously, the solid precipitating agent is a particulate precipitating agent, i.e. is in the form of particles, such as a powder. Advantageously, the particles of the solid precipitating agent have a particle size distribution have a d₁₀ value of at least 0.01 µm, preferably at least 0.05 µm, more preferably at least 0.1 µm, as measured by laser diffraction. Advantageously, the particles of the solid precipitating agent have a particle size distribution have a d₉₉ value of at most 100 µm, preferably at most 75 µm, more preferably at most 50 µm, such as at most 25 µm, or at most 10 µm, as measured by laser diffraction.

Advantageously, the liquid feed has a pH of at least 1, preferably at least 2, more preferably at least 4, most preferably at least 7, such as at least 12. Advantageously, the liquid feed has a pH between 1 and 14, preferably between 2 and 14, more preferably between 4 and 14, most preferably between 7 and 14, such as between 8 and 13 or between 10 and 13, for example a pH of 12.

The inventors have surprisingly discovered that the method of the present invention is suitable to be used with both very acidic liquid feeds and very alkaline feeds. In other words, the process does not require modifying or adapting the pH of the liquid feed prior to contacting it with the solid precipitating agent. This renders the method more versatile and less complex when compared to existing vanadium removal processes. A further advantage is that the formation of salts, which often occurs upon pH adjustments, is avoided.

Advantageously, the vanadium comprising liquid feed comprises or substantially consists of a Bayer liquor.

Advantageously, the vanadium concentration in the vanadium depleted liquid feed resulting from the method of this invention is equal to or lower than 80 %, preferably equal to or lower than 50 %, more preferably equal to or lower than 30 %, most preferably equal to or lower than 25 %, such as equal to or lower than 20 % or equal to or lower than 10 % of the vanadium concentration of the vanadium comprising liquid feed prior to contacting the liquid feed with the solid precipitating agent. In other words, the methods of the present invention allow to remove at least 20 %, preferably at least 50 %, more preferably at least 70 %, most preferably at least 75 %, such as at least 80 % or at least 90 % of the vanadium comprised in the liquid feed.

Advantages of the methods of the present invention include the possibility to remove vanadium at a high removal rate from a wide range of liquid feeds comprising vanadium, wherein the liquid feed does not need to be heated or cooled prior to extraction of vanadium, and wherein no adjustment of the pH of the liquid feed is required.

A further advantage of the methods of the present invention is the high selectivity towards the removal of vanadium, in other words, when the liquid feed comprises further metals, such as Ga, Mo and As, they substantially remain present in the vanadium depleted liquid feed.

Yet a further advantage of the disclosed methods is that when portlandite structured Ca(OH)₂ is used, also aluminium can be removed from the liquid feed. Afterwards, the vanadium and aluminium comprised in the vanadium comprising precipitate can then be extracted by leaching methods known in the art, for example by contacting the precipitate with carbonate and/or bicarbonate comprising solutions, such as solutions comprising Na₂CO₃ and/or NaHCO₃, at elevated temperatures of for example 80 °C and higher, such as approx. 85 °C.

Without wishing to be bound by any theory, the inventors believe that the high versality of processing conditions and the highly selective removal (extraction) of vanadium is realised by the layered structure of the solid precipitating agent.

### Brief description of the figures

Aspects of the invention will now be described in more detail with reference to the appended drawings, wherein same reference numerals illustrate same features and wherein:
Figure 1 shows the X-ray diffraction (XRD) pattern of a solid precipitating agent of the invention.
Figures 2 to 4 show the XRD patterns of the precipitate obtained after contacting the solid precipitating agent of Figure 1 with Bayer liquors.
Figure 5 shows the concentration of vanadium in a Bayer liquor prior to vanadium extraction and after vanadium extraction in function of extraction time.
Figure 6 shows the concentration of aluminium in a Bayer liquor prior to vanadium extraction and after vanadium extraction in function of extraction time.
Figure 7 shows the concentration of gallium in a Bayer liquor prior to vanadium extraction and after vanadium extraction in function of extraction time.
Figure 8 shows the concentration of molybdenum in a Bayer liquor prior to vanadium extraction and after vanadium extraction in function of extraction time.
Figure 9 shows the concentration of arsenic in a Bayer liquor prior to vanadium extraction and after vanadium extraction in function of extraction time.
Figure 10 shows the XRD pattern of a solid precipitating agent of the prior art.
Figure 11 shows the XRD pattern of the precipitate obtained after contacting the prior art precipitating agent of Figure 10 with a Bayer liquor as liquid feed.
Figure 12 shows the XRD pattern of the precipitate obtained after contacting a second prior art precipitating agent with a Bayer liquor as liquid feed.
Figure 13 shows the XRD pattern of the precipitate obtained after contacting a third prior art precipitating agent with a Bayer liquor as liquid feed.
Figure 14 shows the XRD pattern of the precipitate obtained after contacting a fourth prior art precipitating agent with a Bayer liquor as liquid feed.

### Description of embodiments

The solid precipitating agent comprises or substantially consists of calcium hydroxide (Ca(OH)₂) having a portlandite crystal structure. Advantageously, the Ca(OH)₂) has for at least 10 % by weight, preferably at least 20%, more preferably at least 40%, most preferably at least 50 % by weight, preferably at least 60 % by weight, more preferably at least 70 % by weight, most preferably at least 80 % by weight, such as at least 90 % by weight a portlandite crystal structure.

Portlandite is a hydroxide-bearing Ca(OH)₂ mineral that belongs to the oxide mineral class. It crystallizes in the trigonal crystal system and exhibits a layered structure with hexagonal plates and space group P3m. Each hydroxyl group connects three Ca atoms in its (001) layer and is also surrounded by three other hydroxyl groups from the next (001) layer.

Portlandite is a common hydrolysis product of Portland cement, and in nature it occurs in various environments, such as an alternation product of calcium-silicate rocks due to contact metamorphism of larnite-spurrite. It can be produced by combustion of coal seams and spontaneous combustion of bitumen in certain geological formations.

Advantageously, upon contacting the calcium hydroxide having a portlandite crystal structure with a liquid feed comprising vanadium, vanadium comprising ions are adsorbed in the space between the hexagonal plates (the layers) in the portlandite crystal structure, thereby providing an excellent removal (extraction) of vanadium from a liquid feed that is contacted with the portlandite structured calcium hydroxide.

Advantageously, vanadium is removed from the liquid feed and adsorbed in the interlayer space as vanadium oxyanion species, such as - without being limited thereto - VO²⁺, H₂VO⁴⁻, HVO₄²⁻, VO₄³⁻, V₂O₇⁴⁻ and V₁₀O₂₈⁶⁻. Advantageously, the structure of the vanadium oxyanion varies with the pH of the liquid feed. For example, when the pH is high, i.e. 10 or higher, such as 12 to 14, the vanadium is present as VO₄³⁻ anions. The inventors have surprisingly found that the methods of the present invention allow for a highly selective and highly efficient removal of vanadium independent on the composition of the vanadium comprising ions in the liquid feed, in particular independent on the composition of the vanadium oxyanion species. In other words, the methods of the invention are very versatile.

Advantageously, upon contacting the calcium hydroxide having a portlandite crystal structure with a liquid feed that is substantially free from Al and Si, the formed vanadium comprising precipitate has a CaCO₃ calcite structure.

The inventors have further discovered that when the liquid feed further comprises aluminium, upon contacting the liquid feed with a solid precipitating agent comprising or substantially consisting of calcium hydroxide having a portlandite crystal structure, at least part of the calcium hydroxide, such as at least 50 % by weight, preferably at least 60 % by weight, more preferably at least 70 % by weight, most preferably at least 75 % by weight, such as at least 80 % by weight of the calcium hydroxide is converted into a hydroxyl garnet having the formula A₃B₂(SiO₄)₃₋ₓ(OH)ₓ, wherein A, individually, is selected from the group consisting of Ca, Mg, Fe, Mn, wherein at least one A is Ca; wherein B, individually, is selected from the group consisting of Al, Fe, Cr, wherein at least one B is Al; and wherein x is higher than 0 and equal to or lower than 3.

Advantageously, it is the portlandite structured portion of the calcium hydroxide of which at least 50 % by weight, preferably at least 60 % by weight, more preferably at least 70 % by weight, most preferably at least 75 % by weight, such as at least 80 % by weight is converted into a hydroxyl garnet.

More particularly, and advantageously, when the V and Al comprising liquid feed is substantially free from Si, x is 3 and the hydroxyl garnet has the formula A₃B₂(OH)₃, wherein A and B are as hereinabove described.

Alternatively, yet advantageously, when the V and Al comprising liquid feed also comprises Si, the hydroxyl garnet is a nesosilicate hydroxyl garnet having the formula A₃B₂(SiO₄)₃₋ₓ(OH)ₓ, wherein A and B are as hereinabove described and wherein x is higher than 0 and lower than 3, preferably x is equal to or higher than 1.5.

Advantageously, when the V and Al comprising liquid feed also comprises Si, the converted portlandite structured calcium hydroxide is the nesosilicate hydroxyl garnet katoite, i.e. wherein all A are Ca, all B are Al and x is equal to or higher than 1.5 and lower than 3, i.e. Ca₃Al₂(SiO₄)₃₋ₓ(OH)ₓ.

Advantageously, when the liquid feed comprises Al and/or Si, these are present as Al-comprising ions and/or Si-comprising ions, respectively. For example, and in particular when the liquid feed has a high pH value of approx. 14, Al is present in the liquid feed as aluminates (Al(OH)₄⁻).

Additionally or alternatively, the solid precipitating agent comprises or substantially consists of a nesosilicate hydroxyl garnet having the formula A₃B₂(SiO₄)₃₋ₓ(OH)ₓ as hereinabove described. In other words, instead or in addition to calcium hydroxide having for at least 50 % by weight a portlandite crystal structure as the solid precipitating agent (which, as explained hereinabove, upon contact with the liquid feed forms a nesosilicate hydroxyl garnet), such a nesosilicate hydroxyl garnet can be directly used as solid precipitating agent.

Hydroxyl garnets are a specific group within the broader garnet mineral family, characterized by the presence of hydroxyl groups (OH⁻) within their crystal structure. Nesosilicate hydroxyl garnets are a complex group of nesosilicates of the silicate class of minerals. In nesosilicates, only ionic bonds formed with interstitial cations connecting the isolated SiO₄ tetrahedra. The size and the charge of these cations generally determine the structures of these minerals.

Like the portlandite crystal structure, nesosilicate hydroxyl garnets have a layered structure wherein vanadium comprising ions can be adsorbed in the interlayer space. Nesosilicate hydroxyl garnets further comprise Ca²⁺ cations in the interlayer space, and it has been found that these cations are capable of binding with vanadium comprising ions, thereby allowing an excellent adsorption and binding/retaining of vanadium.

When the solid precipitating agent comprises Ca²⁺ cations in the interlayer space acting as bonding positions for adsorbed vanadium comprising ions, compounds such as CaV₂O₆ may be formed. It will be understood that the composition of the formed compounds depends on the composition of the adsorbed V comprising ions.

Examples of vanadium comprising liquid feeds which can be subjected to the methods of the present disclosure include - without being limited thereto: Bayer liquors, remanufacturing solutions of spent desulfurization catalysts, in particular comprising V and one or more of No, Co and Ni, solid-liquid mixtures derived from uraniferous ores, in particular comprising V, Mo and optionally P and S, "concentrates" of effluents obtained after the extraction of uranium, "concentrates" of effluents obtained from uraniferous liquors of the type which result from uranium ores by acid or alkaline processing, and chromium waste residues.

Advantageously, when the solid precipitating agent is contacted with the liquid feed, the mixture is agitated. Agitating the mixture can be performed by means known in the art ensuring good mixing of the precipitating agent with the vanadium comprising liquid feed. Non-limiting examples of suitable agitating methods include mixing methods and vortex inducing methods, such as magnetic stirring, overhead stirring and shacking.

Once a vanadium comprising precipitate and a vanadium depleted liquid feed are obtained, i.e. at the end of the contacting step, the precipitate is separated from the vanadium depleted liquid feed. The separation can be done by means known in the art, such as by filtering using a filter that is permeable to the liquid feed and retains the precipitate, centrifugation or settling.

The vanadium can be recovered from the precipitate by means known in the art, such as by leaching. In particular, the extraction of vanadium from the vanadium comprising precipitate is performed using Na₂CO₃ and/or NaHCOs comprising solutions, where the vanadium from the precipitate is leached into the solution, advantageously at an elevated temperature, such as at least 85 °C. Examples of suitable leaching techniques are described in Extraction of vanadium from high calcium vanadium slag using direct roasting and soda leaching, Li, X-s., Xie, B., International Journal of Minerals, Metallurgy and Materials, 19, 2012, 595; and A novel method to extract vanadium from vanadium-bearing steel slag using sodium carbonate solution, Gao, M-I. et al., Physicochem. Probl. Miner. Process., 54(3), 2018, 911-921.

### Example

### Example 1

In a first step (Step 1) 14.415 g Ca(OH)₂ powder having for 98.9 % by weight a portlandite crystal structure (in short: portlandite Ca(OH)₂) was added to 300 mL of Bayer liquor as liquid feed, which had a temperature of 60 °C. This resulted in a molar concentration of Ca²⁺ cations of 0.65 M. The Bayer liquor solution contained vanadium, (V), aluminium (Al), molybdenum (Mo), Gallium (Ga) and Arsenic (As) in the amounts mentioned in Table 1 ("Bayer liquor"), as measured by inductively coupled plasma optical emission spectroscopy (ICP-OES).

The mixture was kept under magnetic stirring for 30 minutes. A precipitate was formed, which was separated from the Bayer liquor by filtration. The amount of V, Al, Mo, Ga and As in the resulting Bayer liquor was measured (see Table 1, "Step 1"). It is clear that most vanadium has been removed (from 121.7 mg/L to 4.19 mg/L, or a removal of 96.6 %. The amounts of Mo, Ga and As remained stable, indicating a very selective and highly efficient extraction of vanadium. A slight increase of the amount thereof was noted, which is contributed to the evaporation of some Bayer liquor during the extraction step due to the temperature of the Bayer liquor (60 °C).

To investigate the further removal of the remaining vanadium, portlandite Ca(OH)₂ was again added to the Bayer liquor at 60 °C in an amount of 0.65 M Ca²⁺ cations, followed by magnetic stirring for 30 minutes (Step 2). After separation, the concentration of V, Al, Mo, Ga and As was again measured (see Table 1, "Step 2")). The concentration of vanadium in the Bayer liquor had further been reduced, from 4.19 mg/L to 0.51 mg/L. Again, the concentration of Mo, Ga and As remained stable.

The same was repeated once more (Step 3), which confirmed the selective removal of vanadium (again, see Table 1, "Step 3").

**Table 1: composition of Bayer liquor prior and after contacting with portlandite Ca(OH)₂**

| | **Al (g/L)** | **As (mg/L)** | **Ga (mg/L)** | **Mo (mg/L)** | **V (mg/L)** |
|---|---|---|---|---|---|
| **Bayer Liquor** | 52.02 | 23.28 | 246.2 | 467.6 | 121.7 |
| **Step 1** | 39.24 | 24.10 | 254.8 | 494.0 | 4.19 |
| **Step 2** | 29.49 | 19.21 | 260.9 | 503.2 | 0.51 |
| **Step 3** | 20.89 | 19.80 | 262.5 | 519.0 | 0.41 |

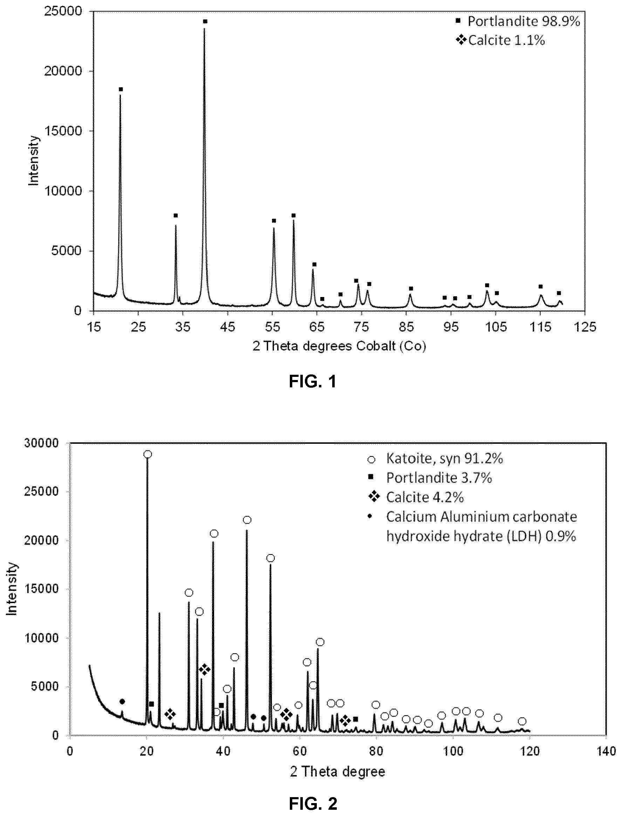

As can be seen from Table 1, the amount of aluminium in the Bayer liquor decreased as well. To further investigate this, the reaction products (the precipitates) were after each step analysed by X-ray diffraction (XRD) analysis and the reaction products were quantified using Rietveld refinement. Fig. 1 shows the XRD pattern of the portlandite Ca(OH)₂, which comprised also 1.1 % of calcite.

Fig. 2 shows the XRD pattern of the precipitate obtained in Step 1, i.e. upon exposure of the portlandite Ca(OH)₂ of Fig. 1 to the initial Bayer liquor solution comprising 121.7 mg/L vanadium. Instead of portlandite Ca(OH)₂, the precipitate now comprises 91.2 % katoite and only 3.7 % portlandite Ca(OH)₂. This katoite has been formed upon reaction of the portlandite Ca(OH)₂ with the aluminium in the Bayer liquor, which explains the reduction of the aluminium concentration in the Bayer liquor after Step 1. This katoite also comprises Ca²⁺ ions which can bind the adsorbed V-comprising ions, thereby leading to high vanadium extraction rates.

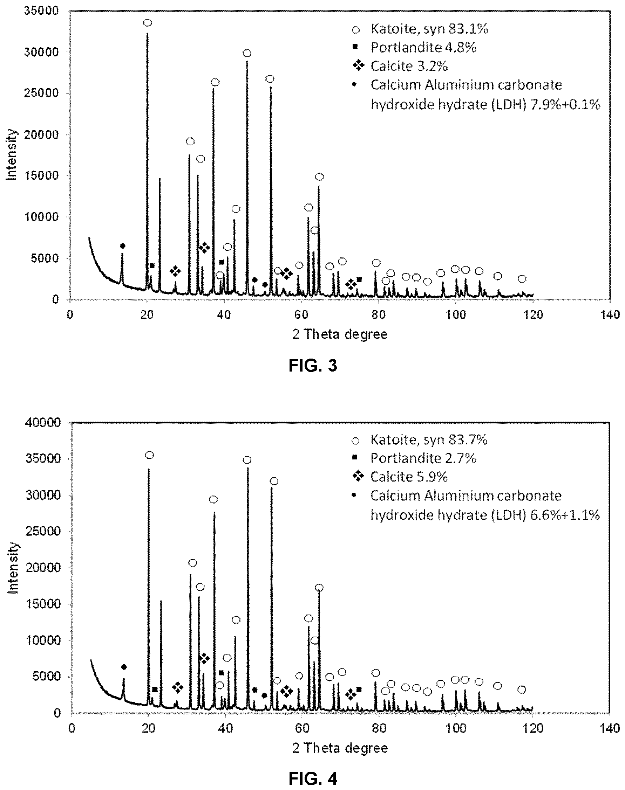

The precipitates obtained from (freshly added) portlandite Ca(OH)₂ after Steps 2 and 3 were also analysed by XRD. Fig. 3 shows that the precipitate obtained in Step 2 comprised 83.1 % katoite. Fig. 4 shows that the precipitate obtained in Step 3 comprised 83.7 % katoite. The percentage of katoite formed in Steps 2 and 3 was lower than in Step 1, which can be explained by the lower concentration of aluminium in the Bayer liquor.

### Example 2

Next, the impact of the contacting time was tested. The same portlandite Ca(OH)₂ (i.e. Ca(OH)₂ powder having for 98.9 % by weight a portlandite crystal structure) and the same Bayer liquor as in Example 1 were used, in the same amounts and at the same temperature. The duration of the magnetic stirring was varied between 5 min, 10 min, 15 min. In Example 1 the duration was 30 min.

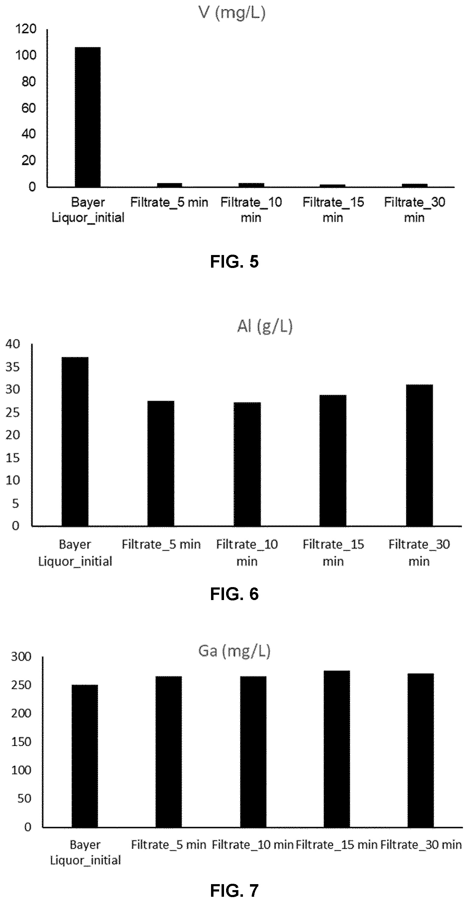

Figures 5 to 9 show the concentration of V, Al, Ga, Mo and As, respectively, for the initial Bayer liquor (equalling the values of Table 1 "Bayer liquor"), and for the Bayer liquor after extraction and separation of the precipitate, for all 4 durations tested. The values after 30 minutes are the same as represented in "Step 1" of Table 1.

From Fig. 5 it is clear that the extraction of vanadium is fast and efficient, and occurs within the first 5 minutes of contacting the Bayer liquor with the portlandite Ca(OH)₂. From Figs. 7 to 9, it is again demonstrated that the method of the invention allows for the highly selective extraction of vanadium, since the concentration of Ga, Mo and As remains stable when compared to prior to extraction, and this for all durations tested. For aluminium, we see a similar behaviour for 5 min, 10 min and 15 min as noticed for 30 min in Example 1, again related to the conversion of the portlandite Ca(OH)₂ to katoite.

### Example 3 - comparative example

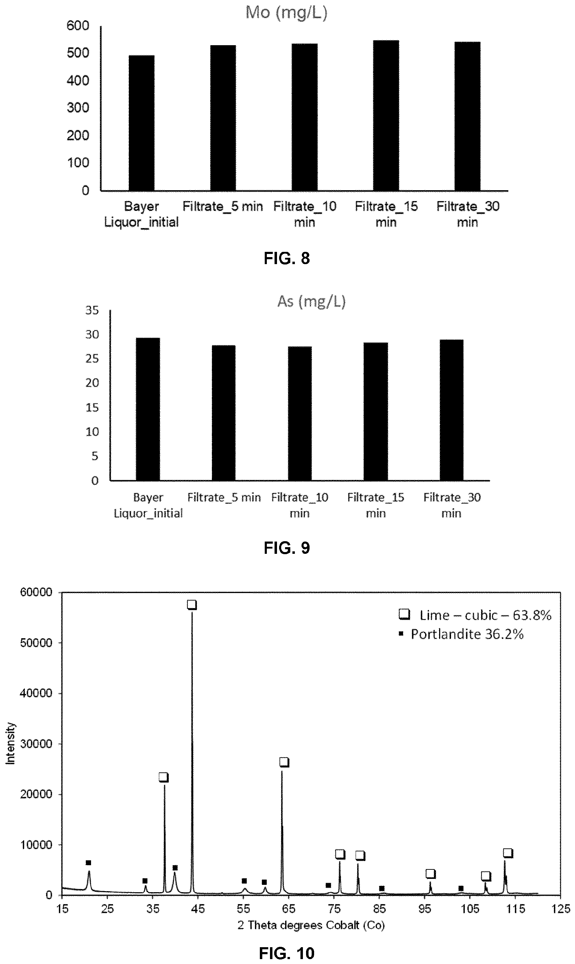

As a comparative example, CaO was used as precipitating agent. The CaO had a mixed structure comprising 63.8 % cubic structure and 38.2 % portlandite crystal structure, as showed by Rietveld analysis of the XRD pattern (Fig. 10).

3.63 g CaO was added to 100 mL Bayer liquor as liquid feed, which had a temperature of 60 °C. This resulted in a molar concentration of Ca²⁺ cations of 0.65 M. The Bayer liquor comprised 107.8 mg/L vanadium, as measured by ICP-OES (see Table 2 "initial").

The mixture was kept under magnetic stirring for 30 minutes. A precipitate was formed, which was separated from the Bayer liquor by filtration. The amount of V, Al, Mo, Ga and As in the resulting Bayer liquor was measured (see Table 2, "Final"). Only a portion of the vanadium has been removed (from 107.8 mg/L to 32.48 mg/L, or a removal of 69.9 %, which is significantly lower than the 96.6 % removal of Example 1, using Ca(OH)₂ powder having for 98.9 % by weight a portlandite crystal structure as precipitating agent.

**Table 2: composition of Bayer liquor prior to and after contacting with CaO**

| | **Al (g/L)** | **As (mg/L)** | **Ga (mg/L)** | **Mo (mg/L)** | **V (mg/L)** |
|---|---|---|---|---|---|
| Initial | 36.04 | 30.63 | 248.4 | 492.7 | 107.8 |
| Final | 29.75 | 30.14 | 271.0 | 538.1 | 32.48 |

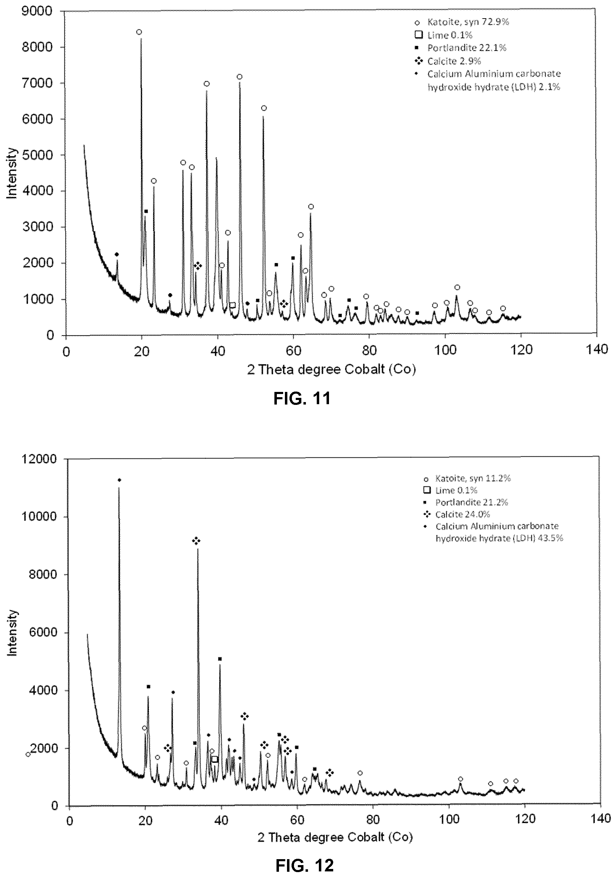

As can be seen from Table 2, the amount of aluminium in the Bayer liquor decreased slightly. The precipitate was analysed by X-ray diffraction (XRD) analysis and the reaction products were quantified using Rietveld refinement. Fig. 11 shows the XDR pattern of the precipitate, which comprised 72.9 % katoite and 22.1 % portlandite, indicating the conversion of the portlandite in the initial CaO and a portion of the cubic structured CaO to katoite and portlandite. Compared to Fig. 2, a lower concentration of katoite is obtained, which can explain the lower extraction rate of vanadium, since katoite is believed to comprise Ca²⁺ cations in the interlayer space which can bond the adsorbed vanadium comprising ions.

A slight increase of the amount of Mo, Ga and As was noted, which is contributed to the evaporation of some Bayer liquor during the extraction step due to the temperature of the Bayer liquor (60 °C).

### Example 4 - comparative example

As a second comparative example, slaked lime (CaO in water, or hydrated lime) was used as precipitating agent. 3.63 g CaO, corresponding to a molar concentration of Ca²⁺ cations of 0.65 M, was first mixed with 50 mL water. The mixture was then added to 100 mL Bayer liquor as liquid feed, which had a temperature of 60 °C. The Bayer liquor comprised 115.7 mg/L vanadium, as measured by ICP-OES (see Table 3 "initial").

The mixture was kept under magnetic stirring for 30 minutes. A precipitate was formed, which was separated from the Bayer liquor by filtration. The amount of V, Al, Mo, Ga and As in the resulting Bayer liquor was measured (see Table 3, "Final"). Only a portion of the vanadium has been removed (from 115.7 mg/L to 72.0 mg/L, or a removal of only 37.8 %, which is significantly lower than the 96.6 % removal of Example 1 using a solid precipitating agent which was added as such, instead of first adding it to water.

**Table 3: composition of Bayer liquor prior to and after contacting with CaO**

| | **Al (g/L)** | **As (mg/L)** | **Ga (mg/L)** | **Mo (mg/L)** | **V (mg/L)** |
|---|---|---|---|---|---|
| Initial | 30.41 | 33.84 | 264.6 | 523.6 | 115.7 |
| Final * | 28.85 | 31.9 | 244.3 | 506.9 | 72.0 |

| | | | | | |
|---|---|---|---|---|---|
| * Values adjusted taking into account the dilution factor | | | | | |

The precipitate was analysed by X-ray diffraction (XRD) analysis and the reaction products were quantified using Rietveld refinement. Fig. 12 shows the XDR pattern of the precipitate, which comprised only 11.2 % katoite and 21.2 % portlandite. Compared to Fig. 2, a much lower concentration of katoite is obtained, which can explain the significantly lower vanadium extraction rate when compared to Example 1, and even when compared to Example 3, using a solid precipitating agent. It follows that the use of a solid precipitating agent is required for obtaining high vanadium extraction rates.

### Example 5 - comparative example

As a third comparative example, two calcium salts were used as precipitating agents: CaCl₂.2H₂O and CaSO_{4.} 0.65 M Ca²⁺ ions as either CaCl₂ and CaSO₄ powder is added to 100mL Bayer liquor solution at 60°C.

The mixture was kept under magnetic stirring for 30 minutes. A precipitate was formed, which was separated from the Bayer liquor by filtration. The amount of V, Al, Mo, Ga and As in the initial and the resulting Bayer liquor was measured and is shown in Table 4 ("Initial" and "Final", respectively) for the use of CaCl₂.2H₂O and in Table 5 ("Initial" and "Final", respectively) for the use of CaSO₄.

Only a portion of the vanadium has been removed: 60.9 % for CaCl₂.2H₂O, and 95.7 % for CaSO₄ as solid precipitating agent, respectively.

**Table 4: composition of Bayer liquor prior to and after contacting with CaCl₂.2H₂O**

| | **Al (g/L)** | **As (mg/L)** | **Ga (mg/L)** | **Mo (mg/L)** | **V (mg/L)** |
|---|---|---|---|---|---|
| Initial | 33.69 | 27.63 | 243.6 | 477.3 | 100.4 |
| Final * | 29.34 | 26.02 | 236.0 | 467.3 | 39.17 |

**Table 5: composition of Bayer liquor prior to and after contacting with CaSO₄**

| | **Al (g/L)** | **As (mg/L)** | **Ga (mg/L)** | **Mo (mg/L)** | **V (mg/L)** |
|---|---|---|---|---|---|
| Initial | 37.84 | 30.34 | 263.7 | 517.7 | 113.4 |
| Final * | 24.80 | 28.07 | 264.5 | 520.2 | 4.91 |

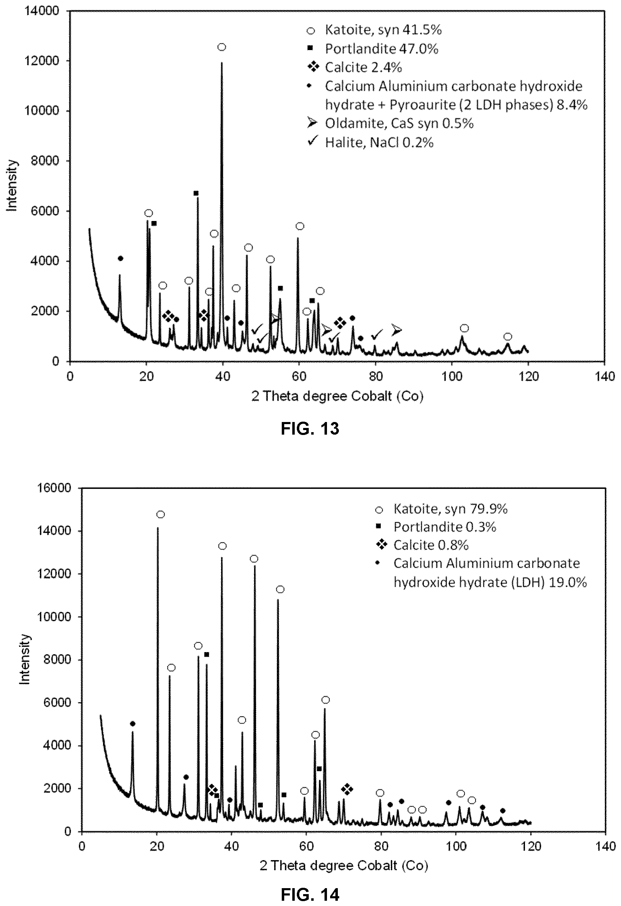

The precipitates were analysed by X-ray diffraction (XRD) analysis and the reaction products were quantified using Rietveld refinement. Fig. 13 shows the XRD pattern of the precipitate obtained with CaCl₂.2H₂O, which comprised 41.5 % katoite and 47.0 % portlandite. Compared to Fig. 2 of Example 1, a lower concentration of katoite is obtained, which can explain the lower vanadium extraction rate when compared to Example 1.

Fig. 14 shows the XRD pattern of the precipitate obtained with CaSO₄, which comprised 79.9 % katoite. Compared to Fig. 2 of Example 1, a lower concentration of katoite is obtained.

Although for CaSO₄ the removal rate of vanadium is similar to the removal rate with the inventive solid precipitating agents of Example 1, a disadvantage of the use of CaSO₄ as precipitating agent is that sulphates are introduced in the liquid feed as an extra species, resulting in the vanadium depleted liquid feed comprising sulphates, which need to be removed afterwards. Further, the precipitate also contains a high percentage of LDH, which incorporate sulphates and which tend to render the removal of the vanadium afterwards, i.e. by leaching, more complex. A further disadvantage of using sulphates as precipitating agent is the risk of salt formation, which is also not recommended.

## Claims

1. A method for removing vanadium from a vanadium comprising liquid feed, the method comprising contacting a vanadium comprising liquid feed with a solid precipitating agent, thereby forming a vanadium comprising precipitate and a vanadium depleted liquid feed, and separating the vanadium comprising precipitate from the vanadium depleted liquid feed, **characterised in that** the solid precipitating agent comprises one or more of
- calcium hydroxide (Ca(OH)₂) having a portlandite crystal structure, and
- a nesosilicate hydroxyl garnet having the formula A₃B₂(SiO₄)₃₋ₓ(OH)ₓ, wherein
A, individually, is selected from the group consisting of Ca, Mg, Fe, Mn, wherein at least one A is Ca,
B, individually, is selected from the group consisting of Al, Fe, Cr, wherein at least one B is Al, and
x is higher than 0 and lower than 3.

2. The method according to claim 1, wherein the solid precipitating agent comprises for at least 10 % by weight, preferably at least 20 % by weight, more preferably at least 40 % by weight, even more preferably 60 % by weight and most preferably at least 70% by weight, the one or more of Ca(OH)₂ with a portlandite crystal structure and the nesosilicate hydroxyl garnet having the formula of claim 1, based on the total weight of the solid precipitating agent.

3. The method according to any one of the preceding claims, wherein the nesosilicate hydroxyl garnet is katoite, wherein all A are Ca, all B are Al, and x is equal to or higher than 1.5.

4. The method according to any one of the preceding claims, wherein the amount of the solid precipitating agent contacted with the vanadium comprising liquid feed corresponds to between 1 and 50000, preferably between 10 and 5000, more preferably between 50 and 500 moles Ca²⁺ per mole of vanadium in the liquid feed.

5. The method according to any one of the preceding claims, wherein the liquid feed has a temperature between 0 °C and 250 °C, preferably between 0 °C and 100 °C, more preferably between 10 °C and 95 °C and most preferably between 15 °C and 90 °C.

6. The method according to any one of the preceding claims, wherein the liquid feed comprises at least 0.1 mg/L of vanadium, preferably at least 1 mg/L, more preferably at least 5 mg/L, most preferably at least 10 mg/L.

7. The method according to any one of the preceding claims, wherein the liquid feed comprises a Bayer liquor.

8. The method according to any one of the preceding claims, wherein the liquid feed further comprises one or more of aluminium (Al), silicon (Si), gallium (Ga), molybdenum (Mo) and Arsenic (As).

9. The method according to claim 8, wherein the liquid feed comprises Al and optionally Si, wherein the solid precipitating agent comprises Ca(OH)₂ having a portlandite crystal structure, and wherein upon contacting the liquid feed with the solid precipitating agent at least 10 % by weight, preferably at least 30 % by weight, more preferably at least 50 % by weight, even more preferably 75 % by weight and most preferably at least 80 % by weight, of the Ca(OH)₂ is transformed into a hydroxyl garnet having a formula A₃B₂(SiO₄)₃₋ₓ(OH)ₓ, wherein.
A, individually, is selected from the group consisting of Ca, Mg, Fe, Mn, wherein at least one A is Ca,
B, individually, is selected from the group consisting of Al, Fe, Cr, wherein at least one B is Al, and
when the liquid feed comprises Si, x is higher than 0 and lower than 3, and when the liquid feed does not comprise Si, x is 3.

10. The method according to claim 9, wherein the liquid feed comprises Si and wherein the hydroxyl garnet is a nesosilicate hydroxyl garnet having the formula of claim 1, preferably wherein the nesosilicate hydroxyl garnet is katoite, wherein all A are Ca, all B are Al, and x is equal to or higher than 1.5.

11. The method according to any one of the preceding claims, wherein the liquid feed and the solid precipitating agent are agitated during contacting.

12. The method according to any one of the preceding claims, wherein the solid precipitating agent is a particulate precipitating agent.

13. The method according to claim 12, wherein the solid precipitating agent particles have a particle size distribution having a d₁₀ value of at least 0.01 µm and a d₉₉ value of at most 100 µm, preferably having a d₁₀ value of at least 0.1 µm and a d₉₉ value of at most 50 µm, as measured by laser diffraction.

14. The method according to any one of the preceding claims, wherein the liquid feed has a pH between 1 and 14.

15. The method according to any one of the preceding claims, wherein the vanadium concentration in the vanadium depleted liquid feed is equal to or lower than 80 %, preferably equal to or lower than 50 %, more preferably equal to or lower than 20 % and most preferably equal to or lower than 10 % of the vanadium concentration of the vanadium comprising liquid feed prior to contacting the liquid feed with the solid precipitating agent.
